# EUROPEAN PATENT SPECIFICATION

(11) **EP 1 618 861 B1**
(45) Date of publication and mention of the grant of the patent: **17.01.2007**
(21) Application number: 04425551.1
(22) Date of filing: 22.07.2004
(51) Int. Cl.: A61G 5/04, A61G 3/06

(54) **A vehicle for disabled persons**
Fahrzeug für Behinderte
Véhicule pour handicapés

(43) Date of publication of application: 25.01.2006
(73) Proprietor: C.R.F. Società Consortile per Azioni, 10043 Orbassano (Torino) (IT)
(72) Inventor: Frigo, Guido, C.R.F. Società Consortile per Azioni, 10043 Orbassano (IT); Fuganti, Antonio C.R.F. Società Consortile, 10043 Orbassano (IT)
(74) Representative: Cerbaro, Elena

(56) References cited:
- EP-A- 0 526 933
- EP-B- 0 251 136
- US-A- 2 227 762

## Description

The present invention relates to a vehicle for disabled persons.

The use of traditional motor vehicles equipped with controls that can be operated by the disabled person requires the disabled person himself to occupy the seat of the vehicle. There are hence necessary frequent operations of transfer of the disabled person from the wheelchair to the seat of the vehicle, and vice versa. Said operations generally call for a particular arrangement of the vehicle in order to facilitate entry therein of the disabled person.

In order to overcome the above drawbacks motor-driven vehicles for disabled persons are known which are able to accommodate the wheelchair occupied by the disabled person himself. Said vehicles, for example of the type illustrated in GB2128560, basically consist of a monocoque body, which is supported by front and rear wheels and defines in its own bottom base a cavity for housing a bottom panel which is designed to accommodate the wheelchair of the disabled person and to enable the aforesaid wheelchair to be put onto and taken off the vehicle itself. Furthermore, the aforesaid vehicle comprises control devices for actuating motors for steering and advance, which are dedicated to each front wheel and for control, via a pair of actuators, of said bottom panel to be lowered and raised with respect to the ground.

Furthermore, the bottom panel is connected to the rear portion of the body of the vehicle via a pin and is connected at the front, via a pair of side chains, supported by rollers fixed to the body of the vehicle, to the front portion of respective protective structures set at the sides of the bottom panel and carried by each rear wheel.

In particular, the vehicle for disabled persons has two different operating configurations, each associated to a respective operating position of the actuators operated by the disabled person via the control devices.

More in particular, in the configuration where the vehicle is travelling, the base of the body of the vehicle and the bottom panel are set on the same plane of lie parallel to and at a distance from the ground, whilst in the configuration where the wheelchair is taken off or put on the body of the vehicle, the base is inclined with respect to the ground, and the bottom panel lies completely on the ground itself.

In greater detail, in the travelling configuration, the operating position of the actuators carries the axle of the rear wheels in a position vertically below the pin connecting the bottom panel to the rear portion of the body of the vehicle. Given that the rear wheels are constrained so as to remain in contact with the ground, the vehicle remains raised with respect to the ground itself.

Instead, in the configuration where the wheelchair is taken off or put on the vehicle, the operating position of the actuators brings the axle of the rear wheels into a position vertically above the aforesaid pin. Given that the rear wheels are constrained to remain in contact with the ground, the body of the vehicle is lowered with respect to the axle of the rear wheels at its own rear end.

In addition, the body of the vehicle is constrained to the front wheels via a spherical joint. Consequently, the displacement of the actuators from one operating position to the other brings about a rotation of the body of the vehicle substantially about a fulcrum constituted by the front wheels. The aforesaid rotation lowers the body of the vehicle itself, inclining it downwards towards the ground, or raises it, bringing it back again into a position parallel to the ground.

Furthermore, in the travelling configuration, the bottom panel is raised with respect to the ground in so far as, at the rear, it is constrained via the aforesaid pin to the body of the vehicle and, at the front, it is constrained to the body of the vehicle via a selectively releasable connection device.

Instead, in the configuration where the wheelchair is put on and taken off the vehicle, the bottom panel of the vehicle rests on the ground in so far as its own rear end remains constrained, via the pin, to the body of the vehicle, which, in this configuration, occupies a position vertically lower than the axle of the rear wheels, and its own front end, thanks to release of the connection device, can be lowered as far as the ground.

Consequently, the displacement of the actuators from one operating position to the other brings about raising and lowering of the bottom panel of the vehicle with respect to the ground.

In addition, a system of pulleys and racks controlled by the raising and lowering of the bottom panel enables opening for rear access to the vehicle and lowering of an ramp for entry into and exit from the vehicle.

The system for moving the bottom panel, constituted by the chains, the protective structures, the pulleys, the racks, the actuators, and the motors for advance and steering, leads to considerable encumbrance also in the front portion of the vehicle, rendering entry and exit of the wheelchair inconvenient, imposing burdensome constraints on the design of the vehicle itself and limiting the spaces available for the wheelchair of the disabled person and for any possible luggage.

Furthermore, during movement of the vehicle for disabled persons from the configuration where the wheelchair is taken off or put on the vehicle to the travelling configuration, the bottom panel of the vehicle, accommodating the disabled person, moves distinctly away from the body of the vehicle itself.

In this way, the reduced weight of the bottom panel proves to be somewhat ineffective in attenuating transmission to the disabled person of the vibrations deriving from the accelerations and decelerations of the bottom panel and from any possible impact.

Furthermore, in the travelling configuration, there could arise risks of accidental opening of the constraint device connecting the bottom panel at the front to the body of the vehicle, with the obvious consequences that this might entail.

Finally, the chains that enable lowering of the bottom panel require periodic adjustments due to the play between the links that inevitably arises following upon prolonged use.

EP-A-0526933 discloses a vehicle for disabled person as defined in the preamble of claim 1.

The purpose of the present invention is to provide a vehicle for disabled persons which will be free from the drawbacks linked to known vehicles and specified above.

The aforesaid purpose is achieved by the present invention in so far as it relates to a vehicle for disabled persons obtained according to Claim 1.

For a better understanding of the present invention, a preferred embodiment thereof is described in what follows purely by way of non-limiting example and with reference to the attached drawings, in which:
- Figure 1 is a side view of a vehicle for disabled persons illustrating the vehicle itself in the configuration in which the disabled person can get on or off the vehicle;
- Figure 2 is a side view of the vehicle illustrating the vehicle itself in the travelling configuration;
- Figure 3 is a view from above of the vehicle in the configuration of Figure 2, with parts removed for reasons of clarity;
- Figure 4 is a front view of the vehicle in the configuration of Figure 2;
- Figure 5 is a view, at an enlarged scale and partially sectioned in the axial direction, of some details of the vehicle of Figure 1; and
- Figure 6 is a side view, at an enlarged scale, of further details of the vehicle of Figure 1.

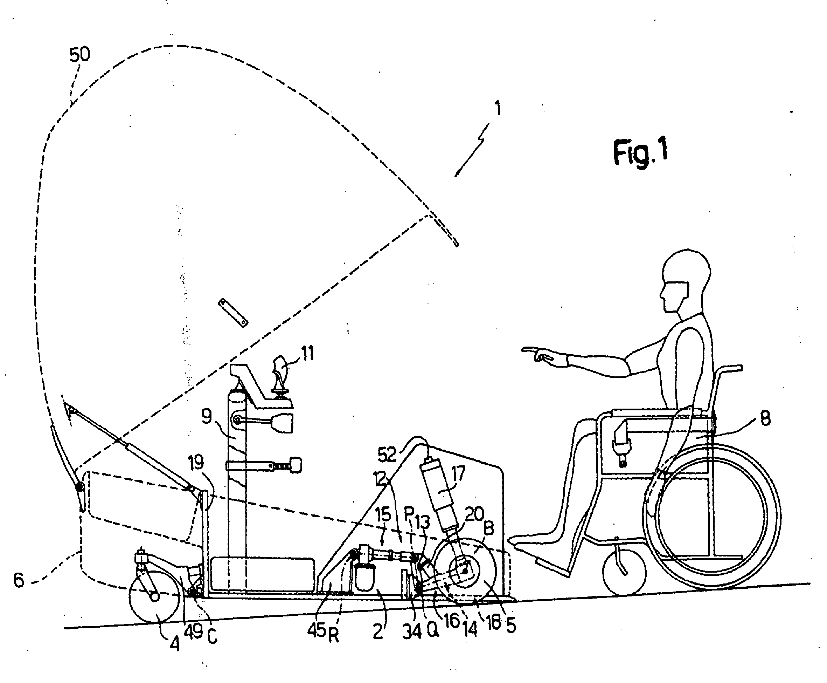

With reference to Figures 1 to 4, designated as a whole by 1 is a vehicle for disabled persons basically comprising a bottom panel 2 defining a station for a wheelchair 8 of a disabled person and supported by a pair of idle front wheels 4 and by a pair of motor-driven rear wheels 5.

In greater detail, the bottom panel 2 comprises a rectangular intermediate portion 3 for housing the wheelchair 8 of a disabled person, set between a pair of side portions 7 for housing respective actuators 15 for movement of the bottom panel 2 and for connecting, via respective constraint assemblies 12, the bottom panel 2 itself to the respective rear wheels 5.

In particular, each side portion 7 extends parallel to the intermediate portion 3 starting from the front end thereof for a length smaller than that of the intermediate portion 3 itself. There thus remains defined a pair of compartments 18, which are set at the sides of the intermediate portion 3 and behind the side portions, for housing the rear wheels 5.

Furthermore, the actuators 15 can be operated by the disabled person via a dashboard 9 extending vertically in cantilever fashion from the front portion of the bottom panel 2 and have two distinct operating positions, corresponding to each of which is a configuration of operation of the vehicle 1.

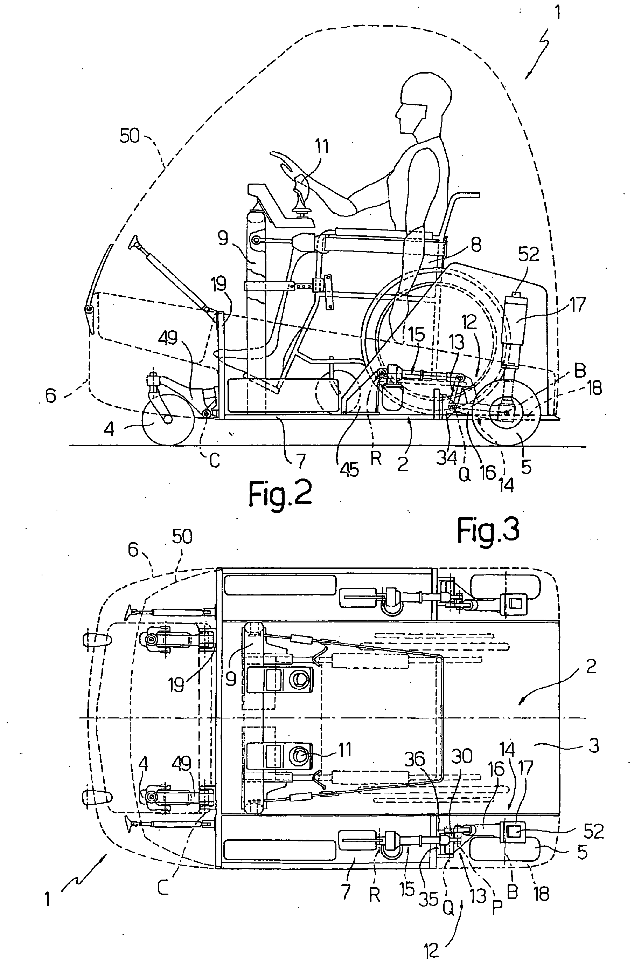

In particular, the vehicle 1 has two different configurations of operation, one corresponding to the travelling conditions and the other corresponding to the conditions where the wheelchair 8 is taken off or put on the vehicle 1. In particular, in the travelling configuration, illustrated in Figure 2, the plane of lie of the bottom panel 2 of the vehicle 1 is parallel to and at a distance from the ground, whilst in the configuration where the wheelchair 8 is taken off or put on the vehicle 1, illustrated in Figure 1, the plane of lie of the bottom panel 2 is inclined with respect to the ground and lowered with respect to the rear wheels 5.

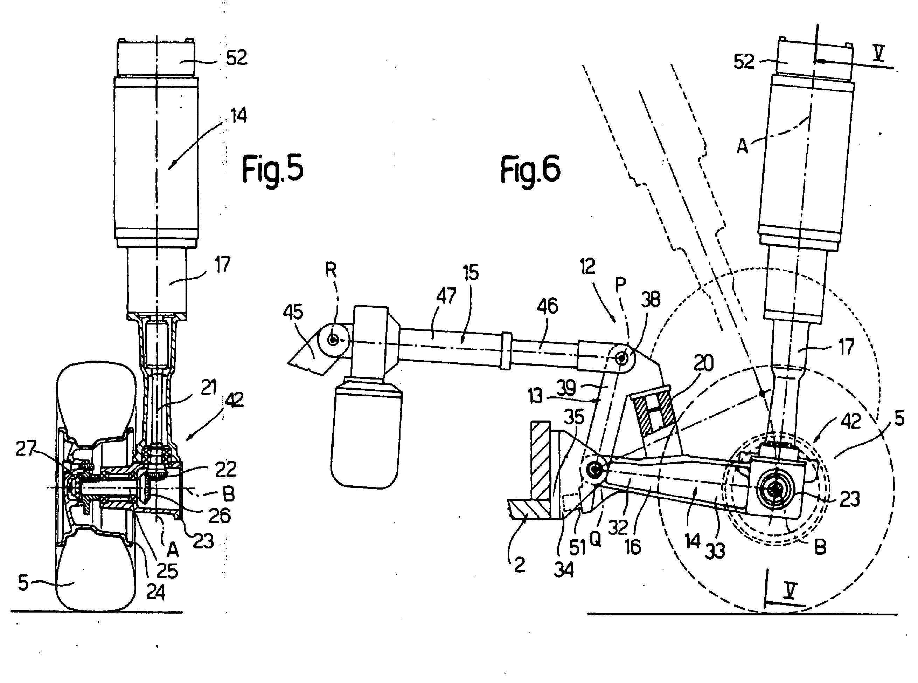

With particular reference to Figure 6, each constraint assembly 12 comprises a first lever 13 and a second lever 14, which are connected together by a spring 20. In particular, each first lever 13 has one end hinged, about an axis P, to the respective actuator 15 and the opposite end hinged, about an axis Q parallel to the axis P and set at a lower vertical height with respect to the axis P, to the bottom panel 2. Furthermore, each second lever 14 has one end hinged to the bottom panel 2 about the axis Q and is restrained on the respective rear wheel 5.

Advantageously, one end of each actuator 15 is hinged to the bottom panel 2 about an axis R distinct from Q, whilst the opposite end is hinged to the first lever 13 about the axis P. As will be illustrated in what follows, each actuator 15 is selectively available in two distinct operating positions. In particular, corresponding to each of the aforesaid operating positions is a different distance between the axis R associated to the bottom panel 2 and a given point, for example coincident with the axis P, distinct from the axis Q, of the respective first lever 13.

In greater detail, each side portion 7 of the bottom panel 2 has a first body 45, on which the respective actuator 15 is hinged about the axis R, which is orthogonal to the direction of travel and defines, with the aforesaid direction of travel, a plane of lie parallel to the ground. Furthermore, each side portion 7 carries, to the rear of the first body 45, a second body 34, hinged on which, in a position corresponding to the axis Q, parallel to R, are the respective first lever 13 and the respective second lever 14, as will be illustrated in what follows.

With particular reference to Figure 6, each actuator 15 is constituted by a liner 47 hinged, about the axis R, to the first body 45 and by a piston 46, actuated by a motor, one end of which is slidable within the liner 47 and the opposite end of which is hinged to the first lever 13 about the axis P.

Consequently, each first lever 13 has one end hinged, in a position corresponding to the axis Q, to the respective second body 34 fixed to the bottom panel 2, and one opposite end hinged, in a position corresponding to the axis P, to the respective actuator 15.

In particular, sliding of the piston 46 within the liner 47 of each actuator 15 brings about rotation of the respective first lever 13 about the cylindrical hinge of axis Q and variation in the distance between a given point of the first body 45 and a given point of the first lever 13 distinct from the axis Q.

In greater detail, and with particular reference to Figures 3,,4 and 6, each first lever 13 is constituted by a first portion 38 with horizontal development, which is hinged to the respective piston 46 of the actuator 15 and is connected to a second portion 39 with vertical development, hinged to the respective second body 34 and to the respective second lever 14.

Furthermore, the lower end of the second portion 39 of each first lever 13 has a through hole within which a pin 31, of axis Q, is fixed. In greater detail, the pin 31 is mounted fixedly with respect to the first lever 13 and is able to rotate, about the axis Q, inside each second body 34 and each second lever 14.

More in particular, each second body 34 has, in a top view, a C shape and is constituted by a plate 35 set parallel to the axis Q, from the side ends of which there extend two portions 36, which have the same extension as one another and are parallel to one another, both of which are directed towards the rear end of the vehicle 1, and between which is a hollow cylindrical end portion 30 of the second lever 14.

In particular, each pin 31 is housed so that it can rotate about the axis Q inside the respective hollow cylindrical end 30 of each second lever 14 and is able to rotate, via appropriate through holes, within the portions 36 of the body 34 carried by each side end 7.

Furthermore, with reference to Figures 3 and 6, each second lever 14 is made of a single piece and is constituted by: a first element 16 hinged about the axis Q by means of its own end 30, which houses the pin 31, to the bottom panel 2 and to the respective first lever 13; and a second element 17, which is restrained on the respective rear wheel 5 and is set substantially orthogonal to the first element 16. In greater detail, each first element 16 is constituted by a first front stretch 32, which is inclined with respect to the axis Q, and is connected to a second rear stretch 33 parallel to the direction of travel of the vehicle. More in particular, each second element 17 is connected to the respective first element 16 at the end of the respective first element 16 itself, opposite to the axis Q.

In particular, each first stretch 32 has, in a position corresponding to the axis Q, a shock absorber 51 made of deformable material for coming into contact with the respective plate 35 of the body 34.

In addition, each spring 20 connects the respective first lever 13 to the first element 16 of the respective second lever 14. In particular, each spring 20 is fixed to the respective first lever 13 in a position corresponding to a projection carried by the second portion 39 in the proximity of the axis P and is fixed to the respective second lever 14 in a position corresponding to the area of connection between the first stretch 32 and the second stretch 33 of the respective first element 16.

In greater detail, with particular reference to Figure 5, the bottom vertical end portion of each second element 17 is restrained on the respective rear wheel 5 via a tubular body 23, which in part extends within the respective rear wheel 5 and in part is connected to the respective first element 16 and to the second element 17 itself.

More precisely, each second element 17 has inside it an electromagnetic brake (in itself known and not illustrated) and a motor 52, which can be actuated from the dashboard 9 for operating the respective rear wheel 5 via a respective transmission assembly 42.

Advantageously, each transmission assembly 42 is completely housed within the respective second lever 14 and the supporting assembly 27 of the respective rear wheel 5.

In greater detail, each transmission assembly 42 transmits the motion from an axis A, orthogonal to P, about which a shaft 21 actuated by each motor 52 rotates, to an axis B, orthogonal to A, about which each rear wheel 5 rotates.

In particular, one end of each shaft 21 is connected to the respective motor 52 via a respective planetary gear train (in itself known and not illustrated), whilst the opposite end carries a bevel gear 22, which projects in cantilever fashion from the second element 17 and is housed within a body 23 of the supporting assembly 27. In greater detail, the body 23 in part is connected to the respective first and second levers 13, 14 and in part is housed inside the rear wheel 5.

Furthermore, each supporting assembly 27 has: a pin 25, which can rotate about the axis B and is accommodated within the portion of the respective body 23 housed by the respective rear wheel 5; and a hub 24, which supports the tyre of the respective rear wheel 5 and is connected to the pin 25.

In particular, the pin 25, which is able to rotate about the same axis B, is designed to be actuated by the respective transmission assembly 42. In greater detail, each pin 25 is connected to the respective rear wheel 5 via a tubular hub 24 and projects from the rear wheel 5 itself within the body 23.

In particular, the end of the pin 25 projecting within the body 23 has a bevel gear 26, which is able to turn about the axis B and meshes with the bevel gear 22, which turns about the axis A and is carried by the shaft 21.

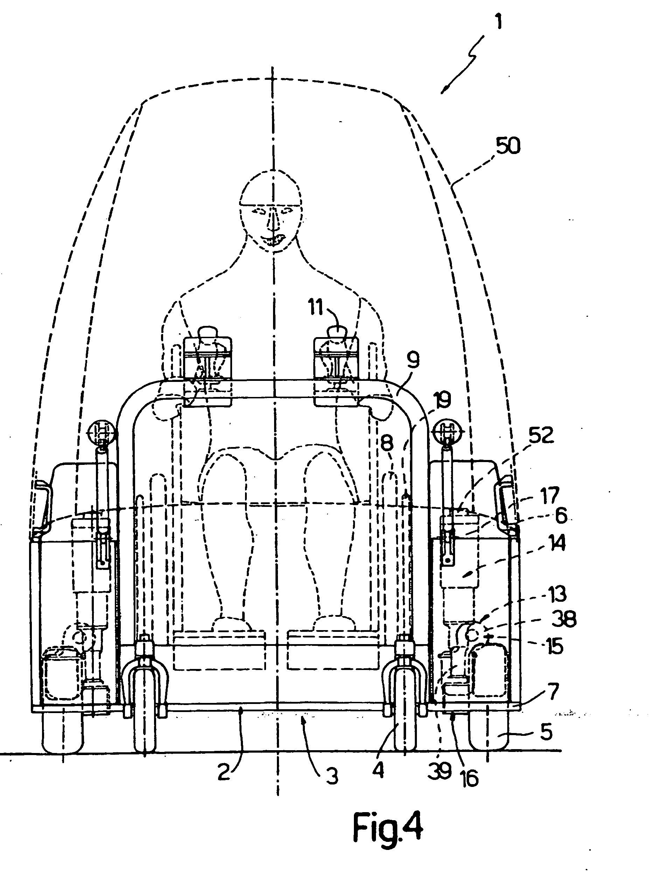

With particular reference to Figures 3 and 4, the bottom panel 2 is supported by the front wheels 4 via a pair of vertical elements 19 projecting in cantilever fashion from the front end of the bottom panel 2 itself.

In greater detail, each front wheel 4 is supported by a respective element 49, hinged about an axis C, to the respective vertical element 19 of the bottom panel 2. More in particular, each front wheel 4 is mounted idle on a respective pin connected to a respective collar supported by the respective element 49.

Consequently, the plane of lie of the bottom panel 2, during displacement from the travelling configuration to the configuration in which the wheelchair 8 is taken off or put on the vehicle 1 and vice versa, is able to rotate about the cylindrical hinge with axis C.

The vehicle 1 further comprises a bodywork 6 fixed to each side portion 7 of the bottom panel 2 in a position corresponding to the respective side end opposite to the intermediate portion 3. A hood 50 is hinged on the front portion of the bodywork 6, co-operates with the intermediate portion of the bodywork 6 itself, and has a rear projection for bearing upon the rear end of the bottom panel 2. The hood 50 can rotate about the bodywork 6 by actuation of two actuators carried by each vertical element 19.

The dashboard 9 comprises two vertical uprights radiused to a horizontal cross member. In greater detail, the dashboard 9 carries a pair of control knobs 11 for actuating and governing the respective propelling and steering motors 52 of each rear wheel 5. In addition, the control knobs 11 enable control of the actuators 15 for activating raising and lowering of the bottom panel 2 with respect to the rear wheels 5. Furthermore, the wheelchair 8 can be fixed to the dashboard 9 via releasable connection means and via a belt set at the rear of the wheelchair 8 itself, the ends of which engage in a releasable way respective engagement elements carried by the dashboard 9.

In use, the vehicle 1 has two different configurations of operation, one corresponding to the travelling conditions and one corresponding to the conditions where the wheelchair 8 is taken off or put on the vehicle 1. In particular, in the travelling configuration, illustrated in Figure 2, the bottom panel 2 of the vehicle 1 is substantially set on a plane of lie parallel to, and at a distance from, the ground, whilst, in the configuration where the wheelchair 8 is taken off or put on the vehicle 1, the bottom panel 2 is inclined with respect to the ground and lowered with respect to the axis B of the rear wheels 5.

Transition from the travelling configuration to the configuration where the wheelchair 8 is taken off or put on the vehicle 1, and vice versa, occurs by operating, via the knobs 11, the actuators 15 and bringing about rotation of the bottom panel 2 about the cylindrical hinge with axis C, as will be described in detail in what follows.

With reference to the transition from the configuration where the wheelchair 8 is taken off or put on the vehicle 1 to the travelling configuration of the vehicle 1, the disabled person operates, via the knobs 11, the actuators 15 so as to bring about a displacement of each piston 46 towards the rear end of the bottom panel 2.

Said displacement of each piston 46 brings about an increase in the free length of the piston 46 itself, which projects from the respective liner 47, and a clockwise rotation of the respective first lever 13 about the axis Q. In particular, the end of the first lever 13, hinged about the axis P, moves fixedly with the piston 46 towards the rear end of the bottom panel 2, whilst the end of the first lever 13, hinged about the axis Q, remains fixed with respect to the bottom panel 2. In greater detail, each point of the first lever 13 distinct from the axis Q increases its own distance from the axis R of hinging of the respective actuator 15 on the bottom panel 2.

Furthermore, the clockwise rotation about the axis Q of each first lever 13 brings about, via the respective spring 20, a similar clockwise rotation of the respective second lever 14 about the axis Q. In particular, the first element 16 of each second lever 14 is hinged to the bottom panel 2 about the axis Q and is connected via the spring 20 to the respective first lever 13. Consequently, each spring 20 compressed by the clockwise rotation about the axis Q of the respective first lever 13 drives in rotation about the same axis Q the respective second lever 14 until an angular position defined by the contrast of the respective shock absorber 51 against the plate 35 of the respective body 34 is reached.

In particular, since each second lever 14 is connected to the axis B of the respective rear wheel 5, the clockwise rotation about the axis Q of each second lever 14 itself would bring about a relative lowering of the respective axis B with respect to the body 34 of the bottom panel 2. Since each rear wheel 5 is constrained to the ground, the aforesaid relative motion can occur only with vertical raising of the respective body 34 of the bottom panel 2 with respect to the axis B of the respective wheel.

There is consequently brought about the counterclockwise rotation (Figure 1) of the bottom panel 2 about the axis C.

Consequently, the displacement of each piston 46 towards the rear of the vehicle 1 enables movement of the vehicle 1 itself from the configuration where the wheelchair 8 is taken off or put on the vehicle 1 to the travelling configuration of the vehicle 1.

With reference to the passage from the travelling configuration of the vehicle 1 to the configuration where the wheelchair 8 is taken off or put on the vehicle 1, the disabled person operates, via the knobs 11 , the actuators 15, bringing about a displacement of each piston 46 towards the front end of the bottom panel 2.

Said displacement of each piston 46 brings about a reduction in the free length of the piston 46 itself projecting from the respective liner 47 and a counterclockwise rotation of the respective first lever 13 about the axis Q. In particular, the end of each first lever 13, hinged about the axis P, moves fixedly with the respective piston 46 towards the front end of the bottom panel 2, whilst the end of each first lever 13, hinged about the axis Q, remains fixed with respect to the bottom panel 2. In greater detail, each point of the first lever 13 distinct from the axis Q decreases its own distance from the axis R of hinging of the respective actuator 15 on the bottom panel 2.

Furthermore, counterclockwise rotation, about the axis Q, of each first lever 13 brings about, via the respective spring 20, a similar counterclockwise rotation about the axis Q of the respective second lever 14. In particular, each first element 16 of the second lever 14 is hinged, about the axis Q, to the bottom panel 2 and is connected, via the respective spring 20, to the respective first lever 13. Consequently, each spring 20, tensioned by the counterclockwise rotation about the axis Q of the respective first lever 13, drives the respective second lever 14 in rotation about the same axis Q.

In particular, since each second lever 14 is connected to the axis B of the respective rear wheel 5, the counterclockwise rotation of each second lever 14 itself about the axis Q would bring about a relative vertical raising of the axis B with respect to the respective body 34 of the bottom panel 2. Since each rear wheel 5 is constrained to the ground, the aforesaid relative motion can occur only with vertical lowering of the respective body 34 of the bottom panel 2 with respect to the respective axis B of each rear wheel 5 itself.

There is consequently brought about a clockwise rotation (Figure 2) of the bottom panel 2 about the axis C.

Consequently, a displacement of the piston 46 towards the front of the vehicle 1 enables movement of the vehicle 1 itself from the its travelling configuration to the configuration where the wheelchair 8 is taken off or put on the vehicle 1.

Furthermore, via the knobs 11, it is possible to operate the motors 52 dedicated to each rear wheel 5.

In particular, each motor 52 actuates the respective shaft 21 and drives the respective gear 22 in rotation. Within the body 23, the gear 22, which is able to rotate about the axis A, drives in rotation, about the axis B, the gear 26, fixed to which are the pin 25, the hub 24, and the tyre of each rear wheel 5.

In particular, imposing different speeds of rotation on the rear wheels 5, it is possible to describe curved stretches. In greater detail, by imposing rotations of opposite direction on the rear wheels 5, it is possible to reverse the direction of travel with a minimal radius of manoeuvre.

From an examination of the characteristics of the vehicle 1 for disabled persons built according to the present invention the advantages that it renders possible are evident.

In particular, for the vehicle 1 there suffice assemblies 12 of only small overall dimensions for constraint of the bottom panel 2 to the rear wheels 5, said assemblies being set at the sides of the portion 3, which is designed to house the wheelchair 8. In this way, larger spaces are made available for housing the wheelchair 8 and any possible luggage, and less restrictive constraints are imposed on the design of the vehicle 1 itself.

Furthermore, during transition of the vehicle 1 from the configuration where the wheelchair 8 is taken off or put on the vehicle 1 to the travelling configuration, the wheelchair 8 housed on the bottom panel 2 moves fixedly with the entire vehicle 1.

In this way, the weight of the entire vehicle 1 proves to be effective in attenuating transmission to the disabled person of the vibrations deriving from the accelerations and decelerations of the bottom panel 2 and from any possible impact.

Furthermore, the bottom panel 2 remains fixed to the rest of the vehicle 1 both in the travelling configuration and in the configuration where the wheelchair 8 is taken off or put on the vehicle, thus increasing the safety of the vehicle 1.

Finally, the assemblies 12 for constraint of the bottom panel 2 to the rear wheels do not call for the use of mechanical members that would be subject to periodic formation of play. Consequently, the constraint assemblies 12 do not require any particular maintenance intervention for adjustment thereof at periodic short intervals.

Finally, it is clear that modifications and variations may be made to the vehicle 1 described and illustrated herein, within the sphere of protection of the appended claims.

## Claims

1. A vehicle (1) for disabled persons comprising: a bottom panel (2) defining a station for a wheelchair (8); one or more front wheels (4), which support said bottom panel (2); at least one pair of rear wheels (5), connected, via constraint means (12), to said bottom panel (2); and actuator means (15) for raising and lowering said bottom panel (2) with respect to the rear wheels (5), wherein said constraint means (12) comprise, for each said rear wheel (5) a first lever (13) and a second lever (14), which are angularly coupled to one another and have first portions (39, 32), hinged to said bottom panel (2) about a common axis (Q), and second portions (38, 33), respectively connected to said actuator means (15) and to said rear wheel (5); said actuator means (15) being selectively available in at least two operating configurations for varying the distance between an axis (R) and a given point (P) of said first lever (13) distinct from said axis (Q); said vehicle further comprising, for each rear wheel (5), a respective actuation motor (52); **characterized in that** each said second lever (14) houses a respective said motor (52).

2. The vehicle according to Claim 1, **characterized in that** the bottom panel (2) is able to rotate about an axis (C) of hinging of said bottom panel (2) to supporting means (49) of said front wheels (4).

3. The vehicle according to Claim 2, **characterized in that** one (14) of said first and second levers (13, 14) has one end portion (51) defining a shock absorber for a contrast portion (35) of said bottom panel (2) in a given angular position.

4. The vehicle according to any one of the preceding claims, **characterized in that** the bottom panel (2) comprises a main portion (3) defining the station for the wheelchair (8) and at least one pair of side portions (7), set on the opposite side of the main portion (3), on each of which said actuator means (15) and said constraint means (12) of the respective said rear wheel (5) are hinged.

5. The vehicle according to the preceding claim, comprising for each said motor (52), a transmission assembly (42) for transmission of the motion from said motor (52) to the respective said rear wheel (5), said vehicle being **characterized in that** said transmission assembly (42) is housed within supporting means (27) of said rear wheel (5) and of said second lever (14).

6. The vehicle according to any one of the preceding claims, **characterized in that** said first lever (13) is connected to said second lever (14) by elastic means (20).

## Patentansprüche

1. Fahrzeug (1) für behinderte Personen mit einer Bodenplatte (2), die einen Standort für einen Rollstuhl (8) bildet, einem oder mehreren Vorderrädern (4), die die Bodenplatte (2) stützen, wenigstens einem Paar von Hinterrädern (5), die über Zwangseinrichtungen (12) mit der Bodenplatte (2) verbunden sind, und Betätigungseinrichtungen (15) zum Anheben und Absenken der Bodenplatte (2) bezüglich der Hinterräder (5), wobei die Zwangseinrichtungen (12) für jedes Hinterrad (5) einen ersten Hebel (13) und einen zweiten Hebel (14) umfassen, die unter einem Winkel miteinander gekoppelt sind und erste Teile (39, 32), die um eine gemeinsame Achse (Q) an die Bodenplatte (2) angelenkt sind und zweite Teile (38, 33) aufweisen, die jeweils mit den Betätigungseinrichtungen (15) und dem besagten Hinterrad (5) verbunden sind, welche Betätigungseinrichtungen (15) wahlweise in wenigstens zwei Betriebsformen verfügbar sind, um den Abstand zwischen einer Achse (R) und einem gegebenen Punkt (P) des ersten Hebels (13) zu verändern, der von der Achse (Q) getrennt ist, welches Fahrzeug weiterhin für jedes Hinterrad (5) einen jeweiligen Betätigungsmotor (52) umfasst, **dadurch gekennzeichnet, dass** in jeden zweiten Hebel (14) ein jeweiliger Motor (52) eingebaut ist.

2. Fahrzeug nach Anspruch 1, **dadurch gekennzeichnet, dass** die Bodenplatte (2) um eine Achse (C) der Gelenkverbindung der Bodenplatte (2) mit Stützeinrichtungen (49) der Vorderräder (4) drehen kann.

3. Fahrzeug nach Anspruch 2, **dadurch gekennzeichnet, dass** ein Hebel (14) der ersten und zweiten Hebel (13, 14) einen Endabschnitt (51) aufweist, der einen Stoßfänger für ein Gegenstück (35) der Bodenplatte (2) in einer gegebenen Winkelposition bildet.

4. Fahrzeug nach einem der vorhergehenden Ansprüche, **dadurch gekennzeichnet, dass** die Bodenplatte (2) einen Hauptteil (3), der den Standort für den Rollstuhl (8) bildet, und wenigstens zwei Seitenteile (7) umfasst, die auf gegenüberliegenden Seiten des Hauptteils (3) angeordnet sind und an jede von denen die Betätigungseinrichtungen (15) und die Zwangseinrichtungen (12) des jeweiligen Hinterrades (5) angelenkt sind.

5. Fahrzeug nach einem der vorhergehenden Ansprüche mit einer Getriebeeinrichtung (42) für jeden Motor (52) zum Übertragen der Bewegung vom Motor (52) auf das jeweilige Hinterrad (5), welches Fahrzeug **dadurch gekennzeichnet ist, dass** die Getriebeeinrichtung (42) in Stützeinrichtungen (27) des Hinterrades (5) und des zweiten Hebels (14) eingebaut ist.

6. Fahrzeug nach einem der vorhergehenden Ansprüche, **dadurch gekennzeichnet, dass** der erste Hebel (13) mit dem zweiten Hebel (14) über eine elastische Einrichtung (20) verbunden ist.

## Revendications

1. Un véhicule pour personnes handicapées comprenant: un panneau inférieur (2) définissant une station pour une chaise roulante (8) ; une ou plusieurs roues avant (4), qui soutiennent ledit panneau inférieur (2) ; au moins une paire de roues arrière (5) connectées audit panneau inférieur (2) par des moyens de contrainte (12) ; et des moyens de commande (15) pour lever et abaisser ledit panneau inférieur (2) par rapport aux roues arrière (5), dans lequel lesdits moyens de contrainte (12) comprennent, pour chacune desdites roue arrière (5), un premier levier (13) et un deuxième levier (14), qui sont angulairement couplés l'un à l'autre et possèdent des premières portions (39, 32) articulées vis-à-vis dudit panneau inférieur (2) autour d'un axe commun (Q), et des deuxièmes portions (38, 33) respectivement connectées auxdits moyens de commande (15) ainsi qu'à ladite roue arrière (5) ; lesdits moyens de commande (15) étant sélectivement disponibles dans au moins deux configurations de fonctionnement pour modifier la distance entre un axe (R) et un point donné (P) dudit premier levier (13), distinct dudit axe (Q) ; ledit véhicule comprenant en outre, pour chaque roue arrière (5), un moteur de manoeuvre (52) respectif ; **caractérisé en ce que** chacun desdits deuxièmes leviers (14) loge un moteur respectif (52).

2. Le véhicule selon la revendication 1, **caractérisé en ce que** le panneau inférieur (2) est capable d'entrer en rotation par rapport à un axe (C) d'articulation dudit panneau inférieur (2) vis-à-vis de moyens de soutien (49) desdites roues avant (4).

3. Le véhicule selon la revendication 2, **caractérisé en ce que** l'un (14) parmi les deux leviers (13, 14) possède une portion d'extrémité (51) définissant un amortisseur pour une portion de contraste (35) dudit panneau inférieur (2) dans une position angulaire donnée.

4. Le véhicule selon l'une quelconque des revendications précédentes, **caractérisé en ce que** le panneau inférieur (2) comprend une portion principale (3) définissant la station pour la chaise roulante (8) et au moins une paire de portions latérales (7), disposées sur le côté opposé de la portion principale (3), sur chacune desquelles lesdits moyens de commande (15) et lesdits moyens de contrainte (12) de ladite roue arrière (5) respective sont articulés.

5. Le véhicule selon la revendication précédente comprenant, pour chacun desdits moteurs (52), un assemblage de transmission (42) pour la transmission du mouvement dudit moteur (52) à ladite roue arrière respective (5), ledit véhicule étant **caractérisé en ce que** ledit assemblage de transmission (42) est logé à l'intérieur de moyens de soutien (27) de ladite roue arrière (5) et dudit deuxième levier (14).

6. Le véhicule l'une quelconque des revendications précédentes, **caractérisé en ce que** ledit premier levier (13) est connecté audit deuxième levier (14) par des moyens élastiques (20).
